# EUROPÄISCHE PATENTSCHRIFT

(11) **EP 0 621 821 B1**
(45) Veröffentlichungstag und Bekanntmachung des Hinweises auf die Patenterteilung: **18.09.1996**
(21) Anmeldenummer: 93901629.1
(22) Anmeldetag: 13.01.1993
(51) Int. Cl.: B27G 19/10, B23D 47/00

(54) **Sägemaschine mit Sägeblatt mit Spanreissschutz**
Sawing machine with a saw blade with anti-splinter device
Scies mécaniques à lame avec dispositif anti-éclatement

(30) Priorität: 14.01.1992 DE 4200713; 17.03.1992 DE 9203580 U
(43) Veröffentlichungstag der Anmeldung: 02.11.1994
(73) Patentinhaber: ROBERT BOSCH GMBH, 70442 Stuttgart (DE)
(72) Erfinder: KÄLBER, Gerhard, D-7130 Mühlacker (DE); KÄLBER, Ralf, D-7130 Mühlacker (DE)
(86) Internationale Anmeldenummer: DE9300014
(87) Internationale Veröffentlichungsnummer: WO9313919

(56) Entgegenhaltungen:
- EP-A- 0 163 186
- EP-A- 0 259 716
- WO-A-83/02917
- CH-A- 380 356
- DE-U- 9 106 212
- US-A- 3 623 518
- SOVIET INVENTIONS ILLUSTRATED Section PQ, Week 8635, 12. September 1986 Derwent Publications Ltd., London, GB; Class P, AN 86-231141 & SU,A,1 206 083 (MOROZOV) 23. Januar 1986 siehe zusammenfassung

## Beschreibung

Die Erfindung betrifft eine Sägemaschine mit Sägeblatt mit Spanreißschutz, der mit der Sägemaschine betrieblich verbindbar, auf Werkstücke auflegbar und seitlich vom Sägeblatt sowie im Bereich der aus dem Werkstück herausfahrenden Sägeblatt-Zähne anorderbar ist.

Eine Sägemaschine mit Spanreißschutz der eingangs genannten Art ist bekannt und z.B. in der DE 37 18 232 C2 als Schutzplatte einer Kreissäge beschrieben. Die Kreissäge besteht aus einem Sägetisch und einem motorisch angetriebenen Sägeblatt, wobei der Sägetisch eine Ausnehmung für den Durchtritt des Sägeblatts zu einem zu sägenden Werkstück aufweist und wobei der Ausnehmung die lösbar am Sägetisch befestigbare Splitterschutzplatte zugeordnet ist, die beim Gebrauch am Werkstück aufliegt und die Ausnehmung beiderseits des Sägeblatts abdeckt. Die Splitterschutzplatte besteht hierbei aus Hartgummi, Kunstoff oder dgl. sägbarem, nicht splitterndem Material, wobei sie im Neuzustand geschlossen ausgebildet ist und durch die erste Schwenkbewegung des Sägeblattes einen Sägeschlitz erhält. Als Nachteil der bekannten Splitterschutzplatte wird die Tatsache empfunden, daß sie diese Funktion dauerhaft nur unter bestimmten Voraussetzungen erfüllen kann, nämlich dann, wenn das Sägeblatt nicht oder kaum flattert, was nur theoretisch möglich ist, und wenn immer dasselbe oder das gleiche Sägeblatt verwendet wird. Wird das ursprüngliche Sägeblatt durch ein anderes ersetzt, dessen Maße von den Maßen des ursprünglichen Sägeblatts abweichen, dann wird der ursprünglich als optimal angesehene Schlitz verändert, was unerwünscht ist. Als ein weiterer Nachteil der bekannten Splitterschutzplatte ist auch die Tatsache anzusehen, daß sie kaum dazu geeignet ist, die Amplituden der Schwingungen des Sägeblattes zu minimieren, da auf das Sägeblatt keine Kraft ausgeübt wird. In der DE-GM 83 14 647 ist eine Bodenplatte für Handkreissägen beschrieben, die eine Ausnehmung für die Pendelschutzhaube und das Sägeblatt aufweist. In dem bezogen auf das Sägeblatt frontseitigen Bereich der Ausnehmung ist ein Spanreißschutz eingefügt, der mit einem der Zahnbreite des Sägeblatts genau angepaßten Schlitze für den Durchtritt des Sägeblatts in diesen Bereich versehen ist. Der Spanreißschutz ist mit der Bodenplatte ortsfest verbindbar, wobei er seine Funktion allenfalls dann erfüllen kann, wenn die Breite seines Schlitzes der Breite der Zähne entspricht. Da das Sägeblatt Schwingungen ausübt, wird die Breite des Schlitzes mit der Zeit größer, so daß sich zwischen dem Sägeblatt und dem Spanreißschutz ein Spalt bildet, der dazu führt, daß ein sauberer Schnitt mit scharfer Kante nicht mehr erreicht werden kann. Aus der EP-A-259 716 ist eine Sägemaschine nach dem Oberbegriff des Anspruchs 1 bekannt.

Ausgehend von dem obigen Stand der Technik liegt der Erfindung die Aufgabe zugrunde, einen alternativen Spanreißschutz zu schaffen.

Die gestellte Aufgabe wird bei der gattungsgemäßen Sägemaschine erfindungsgemäß mit den im kennzeichnenden Teil des Patentanspruchs 1 enthaltenen Merkmalen gelöst.

Man erkennt, daß die Erfindung jedenfalls dann verwirklicht ist, wenn es sich beim Spanreißschutz um einen Körper handelt, der im Betriebszustand der Handkreissäge gleichzeitig sowohl mit den Werkstück als auch mit den herausfahrenden Sägeblatt-Zähnen in Wirkverbindung steht, so daß der Spanreißschutz nicht nur auf das Werkstück, sondern auch auf das Sägeblatt Kraft ausübt. Durch diese Kraftausübung wird verhindert, daß es zu einer Spaltbildung zwischen den Sägeplatten-Zähnen und dem Spanreißschutz kommt. Da der Spanreißschutz im Bereich des Schnittes auf dem Werkstück satt aufliegt, bildet sich auch in diesem Bereich kein Spalt, der als Ursache einer unsauberen Schnittkante angesehen wird. Durch die Unterdrückung, ja sogar Beseitigung von Schwingungen des Sägeblattes wird auch die Schnittlinie deutlich exakter.

Besonders vorteilhaft ist es, wenn der Spanreißschutz beidseitig federnd an das Sägeblatt argedrückt wird. Er folgt damit jeder Seitwärtsbewegung des Sägeblatts. Weitere zweckmäßige und vorteilhafte Ausgestaltungen der Erfindung gehen aus den Unteransprüchen hervor.

Wird der vorgeschlagene Spanreißschutz bei Sägemaschinen mit Sägetisch eingesetzt, dann ist es zweckmäßig, wenn das auf dem Werkstück aufliegende Teil des Spanreißschutzes in der durch das Werkstück und den Sägetisch definierten Kontaktebene liegt oder aus dem Sägetisch in Richtung des Werkstückes herausragt . Der Alternativvorschlag ist insbesondere dann geeignet, wenn die Sägemaschine zum Schneiden von unebenen Werkstücken eingesetzt wird.

Eine weitere zweckmäßige Ausgestaltung sieht vor, daß der Spanreißschutz mit Bezug auf das Sägeblatt relativ verstellbar und hierbei einstellbar ist. Diese Maßnahme der Erfindung kann vor allem dann vorteilhaft genutzt werden, wenn die Handkreissäge als Tauchsäge ausgebildet ist, deren Tauchtiefe nach Bedarf verändert wird. Durch das radiale Verstellen des Spanreißschutzes ist gewährleistet, daß der Spanreißschutz immer zumindest mit den Sägeblatt-Zähnen in Druckverbindung steht. Eine weitere zweckmäßige Ausgestaltung der Erfindung sieht vor, daß der Spanreißschutz mit der Sägemaschine gelenkig verbindbar und um die Achse des Sägeblatts oder um eine parallel zu dieser Achse verlaufende Achse verschwenkbar ist. Durch diese Maßnahme ist gewährleistet, daß der Spanreißschutz mit den Sägeblatt-Zähnen auch dann betrieblich verbindbar ist, wenn sich die Tauchtiefe des Sägeblatts während des Schneidevorgangs ändert. Ferner ist vorgesehen, daß der Spanreißschutz mit mindestens einem Federelement zusammenarbeitet, durch das der auf das Sägeblatt wirkende Druck des Spanreißschutzes bestimmbar ist. Diese Maßnehme berücksichtigt vor allem die Tatsache, daß bei einer Sägemaschine Sägeblätter mit unterschiedlichen Maßen eingesetzt werden können.

Eine weitere besonderes zweckmäßige Ausgestaltung sieht vor, daß der Spanreißschutz einen mit dem Körper des Sägeblatts in Druckverbindung stehenden Fühler aufweist, der das mit den Sägeblatt-Zähnen in Druckverbindung stehende und als Spanreißschutzorgan ausgebildete Teil trägt. Durch diese Maßnahmen wird die Abnutzung des Teils, das mit den Sägeblatt-Zähnen in. Druckverbindung steht deutlich verringert, da der Fühler den eigentlichen vom Spanreißschutz herrührenden Druck auf das Sägeblatt überträgt, während das Spanreißschutzorgan, das mit den Sageblattzähnen in Wirkverbindung steht, auf das Sägeblatt minimalen Druck ausübt. Der Fühler, der vorzugsweise aus Lagerwerkstoff besteht, dient gleichzeitig als Schwingungsdämpfer des Sägeblattes, so daß durch einfache Maßnahmen zwei Vorteile erreicht werden: Zum einen wird die Abnutzung des Spanreißschutzes deutlich verringert, zum anderen kann das Spanreißschutzorgan aus einem deutlich weicheren Werkstoff bestehen als der Fühler.

Eine weitere besonders zweckmäßige Ausgestaltung der Erfindung sieht vor, daß der Spanreißschutz in einem mit der Sägemaschine lösbar verbindbaren Gehäuse unterbringbar ist, so daß er, sind die einzelnen Teile des Spanreißschutzes abgenutzt, ohne weiteres ersetzt werden können.

Schließlich bezieht sich die Erfindung auch auf eine Sägemaschine, die mit einem oben beschriebenen Spanreißschutz bestückbar ist.

Einige Ausführungsbeispiele der Erfindung sind in der Zeichnung schematisch dargestellt und werden im folgenden näher erläutert. Es zeigen
- Fig. 1: einen Teil einer Sägemaschine in vertikaler Draufsicht mit einem Spanreißschutz,
- Fig. 2: eine Sägemaschine mit einem weiteren Spanreißschutz,
- Fig. 3: eine Sägemaschine, deren Spanreißschutz schwenkbar gelagert ist,
- Fig. 4: die in Fig. 3 dargestellte Sägemaschine in Richtung des Pfeiles IV, und zwar während des Schneidevorganges,
- Fig. 5: die in Fig. 4 dargestellte Sägemaschine vor dem Schneidevorgang,
- Fig. 6: eine Sägemaschine mit einem Spanreißschutz, dessen Spanreißschutzorgan schwenkbar gelagert ist,
- Fig. 7: die in Fig. 6 dargestellte Sägemaschine in Seitenansicht,
- Fig. 8: einen Sägetisch mit Teilen des Spanreißschutzes.
- Fig. 9: eine Stichsäge mit Spanreißschutz in vertikaler Draufsicht,
- Fig. 10: die in Fig. 9 dargestellte Stichsäge in Seitenansicht.
- Fig. 11: einen als separates Teil ausgebildeten Spanreißschutz,
- Fig. 12: den in Fig. 11 dargestellten Spanreißschutz in betrieblicher Verbindung mit einer Handkreissäge und
- Fig. 13: die in Fig. 12 dargestellte Handkreissäge in Richtung des Pfeiles XII.

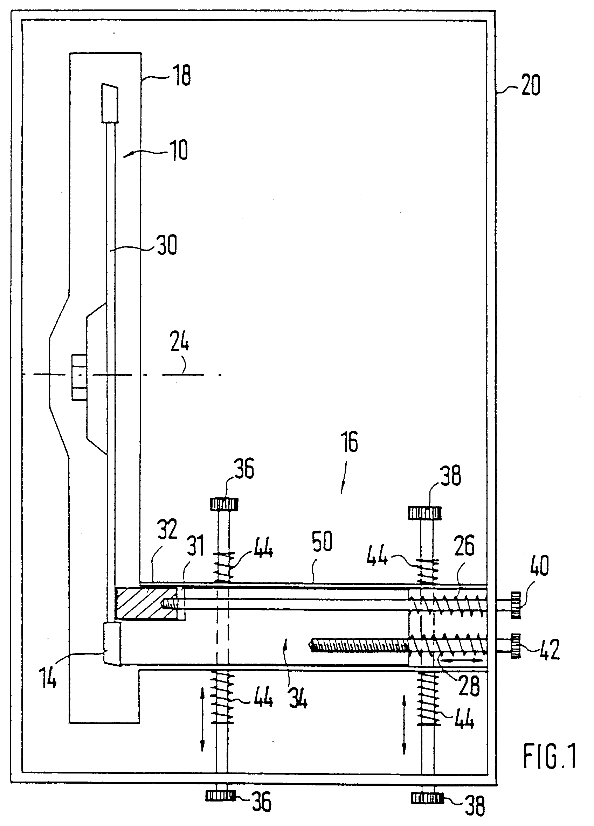

In Fig. 1 ist ein Teil einer Sägemaschine mit Sägeblatt 10 und Spanreißschutz 16 dargestellt. Der Spanreißschutz 16 ist mit der Sägemaschine betrieblich verbindbar, auf ein nicht dargestelltes Werkstück auflegbar und seitlich vom Sägeblatt 10 sowie im Bereich der aus dem Werkstück herausfahrenden Sägeblatt-Zähne 14 anorderbar. Im Sägetisch 20 der Sägemaschine ist ein Sägeblatt-Durchtritt 18 ausgebildet, in dem das Sägeblatt 10 um die Achse 24 drehbar gelagert ist. Der Spanreißschutz 16 ist so ausgebildet, daß er mit den herausfahrenden Sägeblatt-Zähnen 14 in Druckverbindung steht. Der Spanreißschutz 16 ist ferner so ausgebildet, daß sein auf das Werkstück auflegbare Teil 34 in der durch das Werkstück und den Sägetisch 20 definierten Kontaktebene liegt oder aus dem Sägetisch 20 in Richtung des Werkstückes herausragt. Der Spanreißschutz 16 ist im Gehäuse 15 untergebracht, dessen radiale Lage durch die Schrauben 36 und 38 bestimmbar ist. Da es sich um keine starre Verbindung zwischen den Einstellschrauben 36, 38 und dem Gehäuse 50 handelt, sind Federelemente 44 vorgesehen, die auf das Gehäuse 50 Druck ausüben.

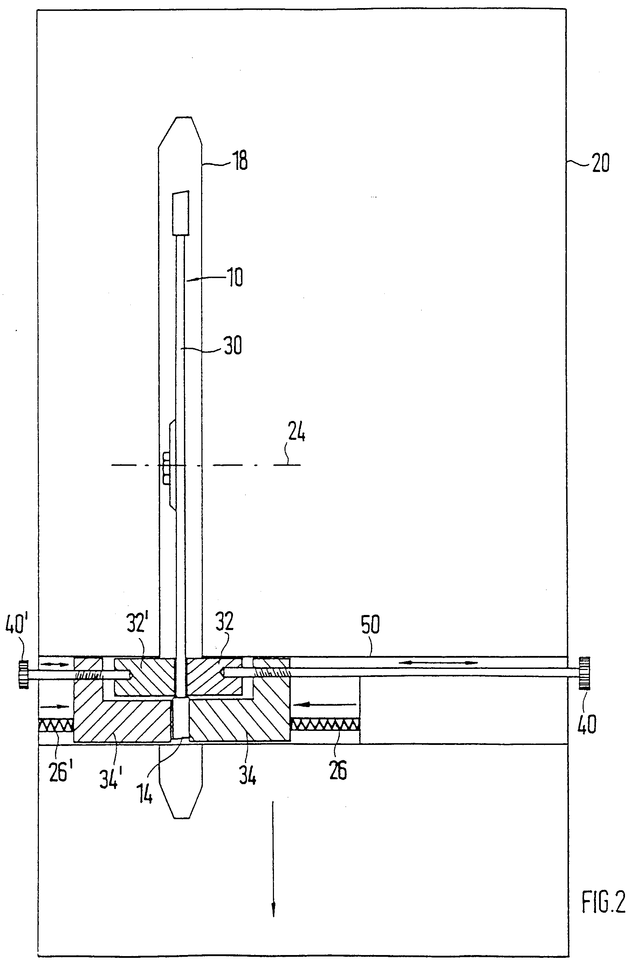

Der Spanreißschutz 16 besitzt ferner einen Fühler 32, der mit dem Körper 30 des Sägeblattes in Druckverbindung steht, und das mit dem Sägeblatt-Zähnen 14 in Druckverbindung stehende und als Spanreißschutzorgan ausgebildete Teil 34. Man erkennt, daß der Fühler 32 sowie das Spanreißschutzorgan 34 in Achsrichtung des Sägeblattes 24 verstellbar und hierbei einstellbar sind. Das Spanreißschutzorgan 34 ist mit Bezug auf den Fühler 32 relativ verstellbar, wobei der Fühler 32 als Mitnehmer des Spanreißschutzorgangs 34 ausgebildet ist. In der Ausgangsstellung, das heißt vor der Inbetriebnahme des Spanreißschutzes, ist zwischen dem Fühler 32 und dem Spanreißschutzorgan 34 ein Spalt 31 ausgebildet. Wird nun die Sägemaschine eingeschaltet, dann stehen die Sägeblatt-Zähne 14 mit dem aus schneidbaren Werkstoff bestehenden Spanreißschutzorgan 34 in Wirkverbindung, so daß der Spalt 31 minimiert wird. In diesem Bereich stützt sich das Spanreißschutzorgan am Fühler 32 ab. Zu einer weiteren Abnutzung des Spanreißschutzorgans 34 kommt es praktisch dann, wenn es zur Abnutzung des Fühlers 32 kommt, der mit dem ebenen Abschnitt des Körpers 30 in Druckverbindung steht. Obwohl sowohl der Fühler 32 als auch das Spanreißschutzorgan 34 mit jeweils einem Federelement 26 bzw. 28 in Druckverbindung stehen, kann das Federelement 28 das Spanreißschutzorgan 34 nur gegen den Fühler 32 drücken. Der Fühler 32 sowie das Spanreißschutzorgan 34 könnem zudem durch Einstellschrauben 40 und 42 reguliert werden, und zwar in Richtung der Achse 24. In Fig. 2 ist gezeigt, daß beide Seiten des Sägeblattes 10 mit jeweils einem Spanreißschutz zusammenarbeiten. Dabei sind die einzelnen Teile des Spanreißschutzes in etwa spiegelbildlich ausgebildet. Der Fühler 32', das Spanreißschutzorgan 34' sowie das Federelement 26' entsprechen in etwa den entsprechenden Teilen des anderen Spanreißschutzes.

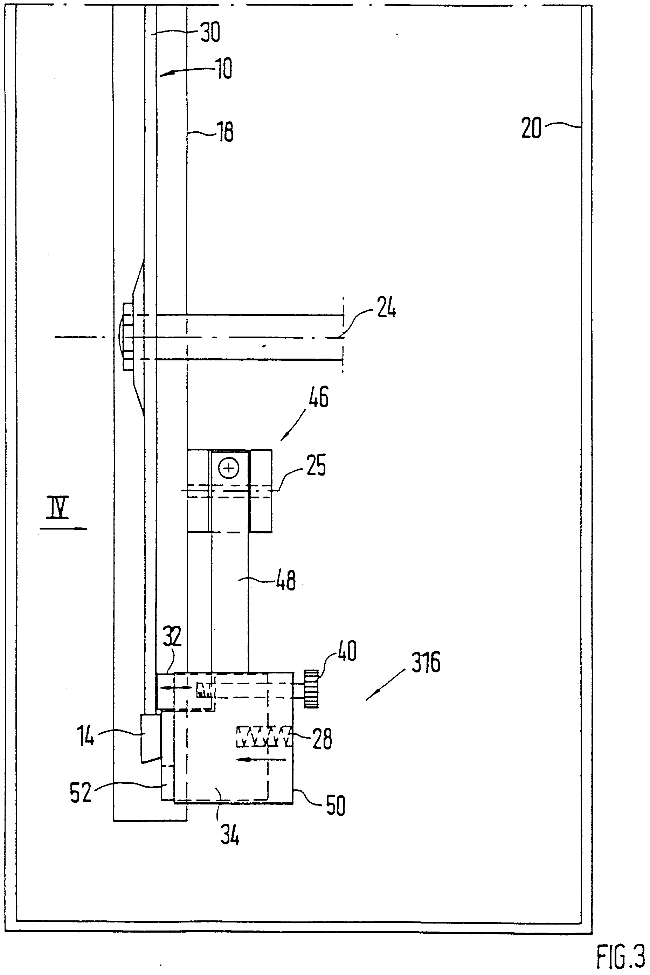

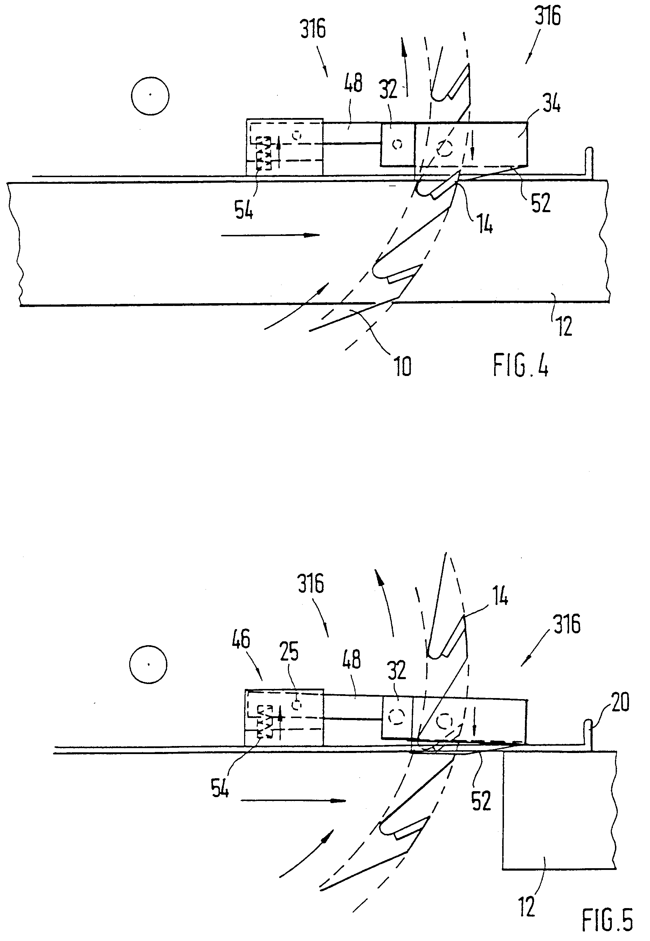

In den Figuren 3 bis 5 ist ein Spanreißschutz 316 dargestellt, der über eine Gelenkstange 48 und ein Gelenk 46 um eine Achse 25 verschwenkbar ist. Die Achse 25 verläuft parallel zur Achse 24 des Sägeblattes 10. Somit ist der Spanreißschutz 316 in Drehrichtung des Sägeblattes 10 verschwenkbar. Der Fühler 32 sowie das Spanreißschutzorgan 34 sind in einem Gehäuse 50 untergebracht. Wie insbesondere die Figuren 4 und 5 erkennen lassen, ist das Spanreißschutzorgan 34 voreilend und besitzt eine Anlaufschräge 52. Der Gelenkarm 48 arbeitet mit einer Druckfeder 54 zusammen, die bestrebt ist, den Spanreißschutz 316 gegen das Werkstück zu drücken.

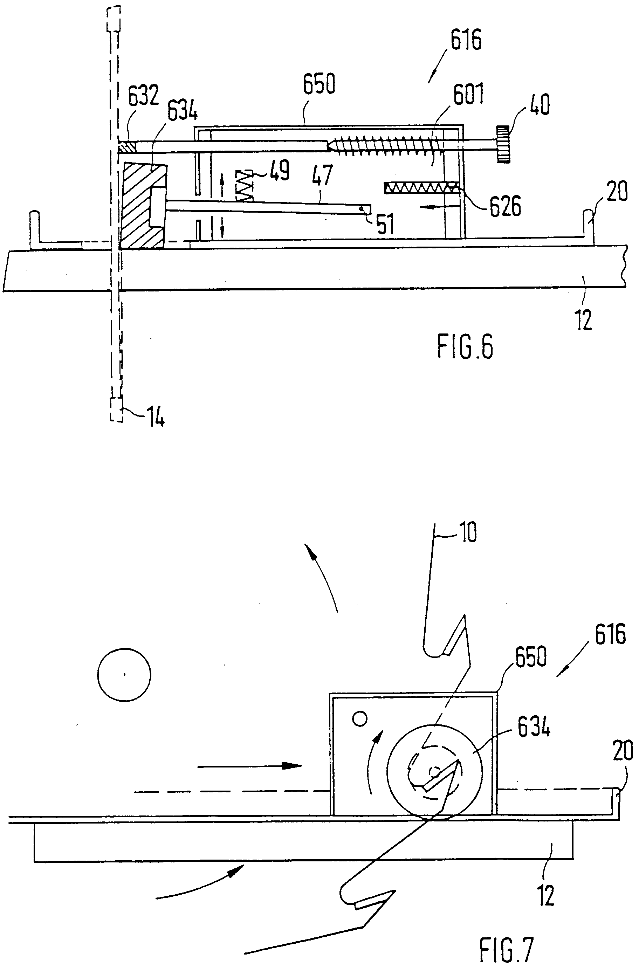

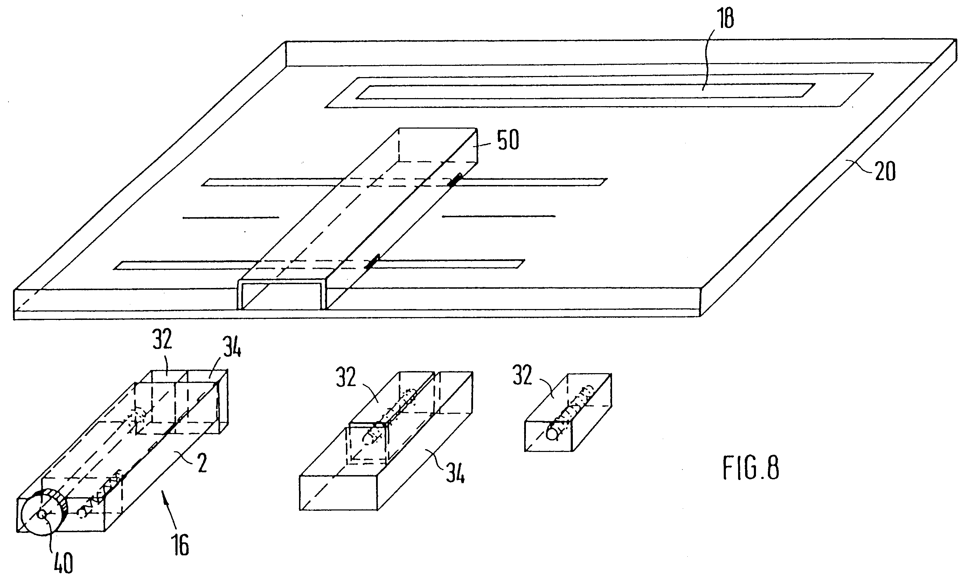

In den Figuren 6 und 7 ist eine Handkreissäge mit einem Spanreißschutz 616 dargestellt, der in einem Gehäuse 650 untergebracht ist und einen Fühler 632 sowie ein Spanreißschutzorgan 634 aufweist. Im Gehäuse 650 ist ein Körper 601 untergebracht, der mit dem Federelement 626 in Druckverbindung steht und sowohl den Fühler 632 als auch das Spanreißschutzorgan 634 trägt. Der Fühler 632 ist durch die Einstellschraube 40 einstellbar, während das Spanreißschutzorgan 634 mit dem Körper 601 gelenkig verbindbar und um die Achse 51 verschwenkbar ist. Das Spanreißschutzorgang 634 ist um die Längsachse des Gelenkarmes 47 verdrehbar und in Richtung der Pfeile verschenkbar. Der Gelenkarm 47 arbeitet mit einem Federelement 49 zusammen, welches bestrebt ist, das Spanreißschutzorgan 634 gegen das Werkstück 12 zu drücken.

In Fig. 8 ist ein Sägetisch 20 mit einem Sägeblatt-Durchtritt 18 sowie einem Gehäuse 50 dargestellt. In das Gehäuse 50 ist der Spanreißschutz 16 mit Fühler 32 und Spanreißschutzorgan 34 einbringbar. Diese beiden Teile sind zudem in einem weiteren Gehäuse 2 untergebracht, so daß das Einstecken bzw. die Herausnahme des Spanreißschutzes 16 in das Gehäuse 50 bzw. aus diesem problemlos erfolgen kann.

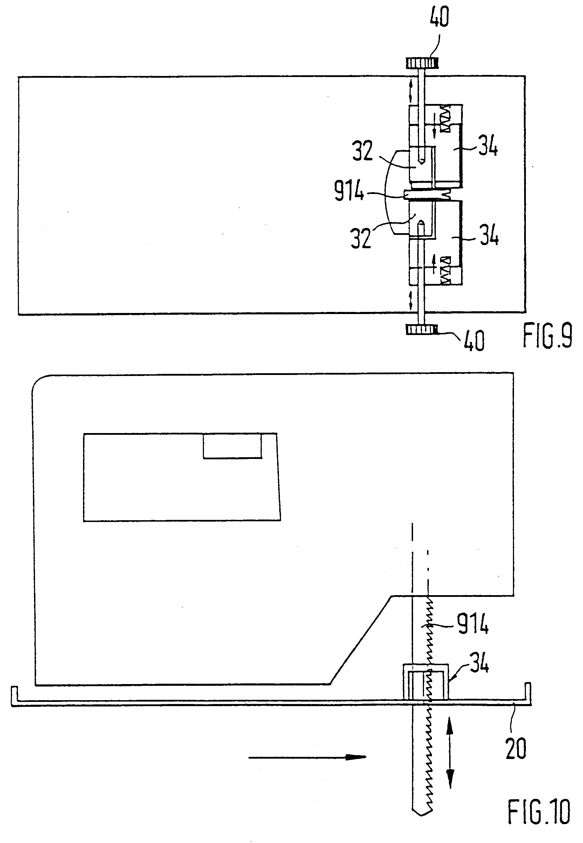

Die Fig. 9 und 10 zeigen, daß der Spanreißschutz auch bei einer Stichsäge verwendet werden kann, wobei das Sägeblatt 914 vertikale Hin- und Herbewegungen ausübt.

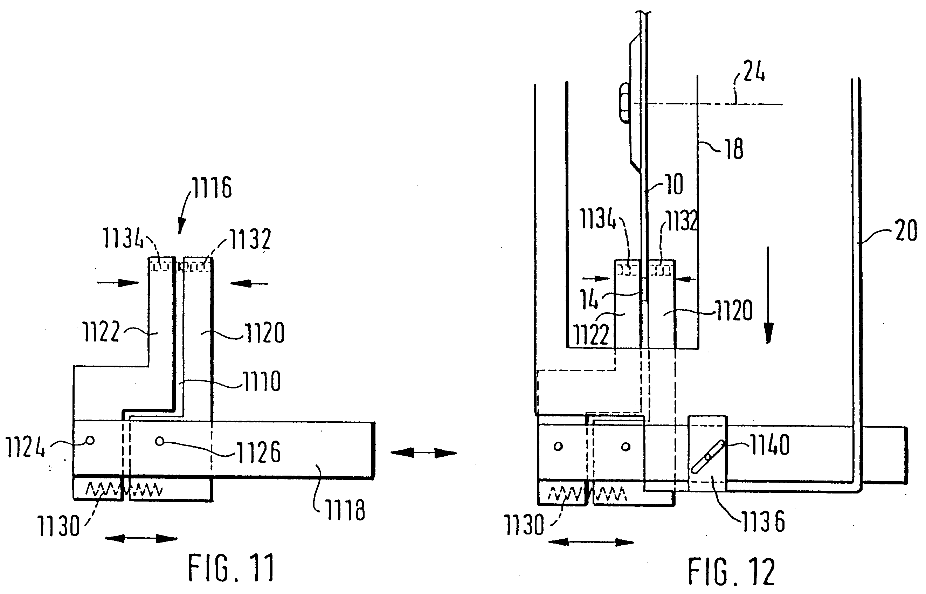

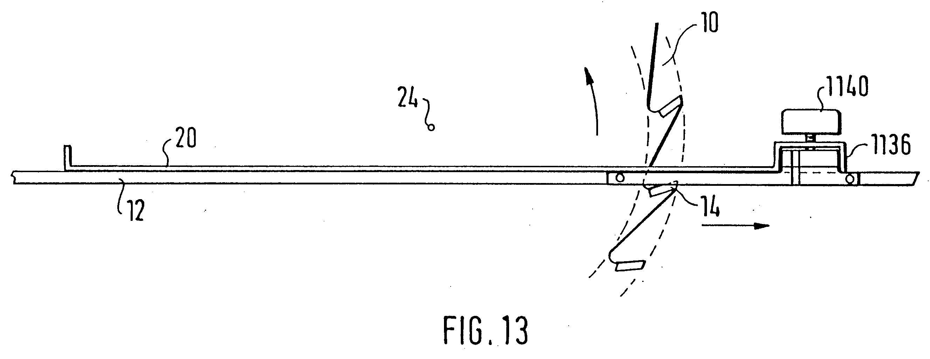

In den Fig. 11 bis 13 ist ein Spanreißschutz 1116 dargestellt, der als Zubehör für Handkreis - und Stichsägen vorgesehen und somit als separates Teil ausgebildet ist. Dieser Spanreißschutz 1116 besteht aus einem Steckteil 1116 mit zwei seitlich vom Sägeblatt 10 positionierbaren Spanreißschutzorganen 1120 und 1122 aus schneidbarem Werkstoff, d. h. einem Werkstoff, dessen Härte geringer ist als die Zähne der Sägemaschine. Die Spanreißschutzorgane 1120 und 1122 besitzen im Kontaktbereich mit dem Sägeblatt 10 Fühler 1132 und 1134, deren Härte größer ist als die Härte der Spanreißschutzorgane 1120 und 1122 und die vorzugsweise aus Lagerwerkstoff bestehen.

Ein weiteres Merkmal der Spanreißschutzorgange 1120 und 1122 ist, daß sie am Steckteil 1118 angelenkt sind, und zwar in den Bereichen 1124 und 1126. Die von den Fühlern 1132, 1134 abgewandten Enden der Spanreißschutzorgane 1120, 1122 arbeiten mit einer Druckfeder 1130 zusammen, die bestrebt ist, die Fühler 1132, 1134 gegen das Sägeblatt 10 zu drücken. Die Besonderheit dieser Anlenkung besteht insbesondere darin, daß durch den Spalt 1120, der zwischen den Spanreißschutzorganen 1120, 1122 ausgebildet ist, beide Spanreißschutzorgane unabhängig voneinander in Druckverbindung mit dem Sägeblatt 10 bringbar sind. Sie stehen sozusagen schwimmend mit dem Sägeblatt 10 in Druckverbindung und können daher seitlichen Bewegungen des Sägeblattes folgen. Die Sägemaschine besitzt eine Steckaufnahme 1136 mit einer Spannschraube 1140, die zur Fixierung des Steckteils 1118 dient. Eine weitere Besonderheit des Spanreißschutzes 1116 besteht darin, daß er bevorzugt auch mit Führungsschienen für Sägemaschinen in Wirkverbindung gebracht werden kann, da seine Dicke etwa der Dicke der Führungsschienen entspricht, so daß der Spanreißschutz 1116 satt auf dem Werkstück aufliegen kann, ohne daß sich zwischen dem Sägezahn 14 und dem Spanreißschutzorgan 1120, 1122 ein Spalt bilden würde, der zur Bildung von Splittern im Bereich oberer Kanten des Werkstückes entscheidend beiträgt.

Zusammenfassend kann festgestellt werden, daß der vorgeschlagene Spanreißschutz bzw. das Ausreißschutzsystem bei Handkreissägen, bei Stichsägen, stationären Sägen oder auch Großsägen eingesetzt werden kann. Die Herstellungskosten des Spanreißschutzes sind miminal, da er aus separaten Teilen hergestellt werden kann, die sodann mit einer Handkreissäge betrieblich verbunden werden. Das Ausreißen des Werkstoffes wird direkt am Sägezahn unterbunden, so daß es keiner parallelen Führung des Sägetisches bedarf. Der komplette Ausreißschutz mit Fühler wird federnd am Sägeblatt geführt, so daß zwischen den Sägezähnen und Ausreißschutz keinerlei Spalt entsteht. Der Fühler kann aber auch nach Bedarf nachjustiert werden.

Ein weiterer Vorteil des vorgeschlagenen Spanreißschutzes besteht darin, daß er auch unterhalb des Sägetisches angebracht werden kann. Dadurch ist auch bei Unebenheiten der Werkstückoberfläche ein Aussplittern unterbunden. Dabei ist es vorteilhaft, den Spanreißschutz an der Sägemaschine federnd anzubringen. Fühler und Spanreißschutzorgan sind Formteile, die problemlos austauschbar und kostengünstig herstellbar sind.

Der Fühler 32 ist vorzugsweise aus einem Lagerwerkstoff, wie Bronze, Sintermetall oder Kohle. Das Sintermetall kann auch ölgetränkt sein. Ein Fühler aus Kohle hätte den zusätzlichen Vorteil, daß er sich langsam abnutzt und damit auch das Spanreißschutzorgan 34 nachführt. Das Spanreißschutzorgan 34 selbst besteht vorzugsweise aus Kunststoff.

## Patentansprüche

1. Sägemaschine mit einem Sägeblatt mit Spanreißschutz, der mit der Sägemaschine betrieblich verbindbar, auf Werkstücke auflegbar und seitlich vom Sägeblatt sowie im Bereich der aus dem Werkstück herausfahrenden Sägeblatt-Zähne anordenbar ist, wobei der Spanreißschutz (16, 1116) mit dem Sägeblatt (10) im Bereich der herausfahrenden Sägeblatt-Zähne (14) auf mindestens einer Seite in Druckverbindung steht, dadurch gekennzeichnet, daß sich der Spanreißschutz (16, 116) mit einem ersten Bereich (32) auf der mindestens einen Seite des Sägeblattes (10) außerhalb des Bereichs der Sägeblattzähne (14) mit einstellbarer Kraft abstützt, wobei nach Einschaltung der Sägemaschine der Spanreißschutz (16, 116) mit einem weiteren, auf das Werkstück auflegbaren Bereich (34) mit einem minimalen Abstand und im wesentlichen ohne Abstützkraft gegenüber dem Sägeblatt (10), auf der mindestens einen Seite der Sägeblattzähne (14) angeordnet ist und wobei dieser weitere Bereich (34) aus einem durch die Sägeblattzähne (14) schneidbaren Werkstoff, z.B. Kunststoff besteht.

2. Sägemaschine nach Anspruch 1, dadurch gekennzeichnet, daß der Spanreißschutz (16, 116) mehrteilig ausgestaltet ist, wobei ein Teil den ersten Bereich, einen Fühler (32), enthält und ein anderer Teil den weiteren Bereich, das Spanreißschutzorgan (34), enthält.

3. Sägemaschine nach Anspruch 2, dadurch gekennzeichnet, daß der Spanreißschutz (16, 1116) einen mit dem Körper (30) des Sägeblatts (10) in Druckverbindung stehenden Fühler (32, 1132, 1134) aufweist, der das mit dem Sägeblatt-Zähnen (14) in Druckverbindung stehende Spanreißschutzorgan (34) trägt.

4. Sägemaschine nach Anspruch 2 oder 3, dadurch gekennzeichnet, daß das Spanreißschutzorgan (34) mit Bezug auf den Fühler (32) relativ verstellbar ist und daß der Fühler (32) als Mitnehmer für das Spanreißschutzorgans (34) ausgebildet ist.

5. Sägemaschine nach einem der Ansprüche 2 bis 4, dadurch gekennzeichnet, daß der Fühler (32, 1132, 1134) aus einem Lagerwerkstoff besteht.

6. Sägemaschine nach einem der Ansprüche 1 bis 5, dadurch gekennzeichnet, daß der Spanreißschutz (16) mit Bezug auf das Sägeblatt (10) radial verstellbar und hierbei einstellbar ist.

7. Sägemaschine nach einem der Ansprüche 1 bis 6, dadurch gekennzeichnet, daß der Spanreißschutz (16) mit der Sägemaschine gelenkig verbindbar und um die Achse (24) des Sägeblatts (10) oder um eine parallel zu dieser Achse (24) Verlaufende Achse (25) verschwenkbar ist.

8. Sägemaschine nach einem der Ansprüche 1 bis 8, dadurch gekenn , dadurch gekennzeichnet, daß der Spanreißschutz (16, 1116) mit mindestens einem Federelement (26, 28) zusammenarbeitet, durch das der auf das Sägeblatt (10) wirkende Druck des Spanreißschutzes (16, 1116) bestimmbar ist.

9. Sägemaschine nach Anspruch 1 mit Sägetisch, dadurch gekennzeichnet, daß der auf dem Werkstück (12) auflegbare weitere Bereich (34, 1120, 1122) des Spanreißschutzes (16, 1116) in einer durch das Werkstück (12) und den Sägetisch (20) definierten Kontaktebene liegt oder aus dem Sägetisch (20) in Richtung des Werkstücks (12) herausragt.

10. Sägemaschine nach einem der Ansprüche 1 bis 10, dadurch gekennzeichnet, daß der Spanreißschutz (16) in einem mit der Sägemaschine lösbar verbindbaren Gehäuse (50) untergebracht ist.

11. Sägemaschine nach einem der Ansprüche 1 bis 11, dadurch gekennzeichnet, daß der Spanreißschutz (1116) aus einem mit der Sägemaschine lösbar verbindbaren Steckteil (1118) mit zwei seitlich vom Sägeblatt (18) anordenbaren Spanreißschutzorganen (1120, 1122) besteht, die mit dem Sägeblatt (10) in Druckverbindung bringbar sind.

12. Sägemaschine nach Anspruch 11, dadurch gekennzeichnet, daß die Spanreißschutzorgane (1120, 1122) am Steckteil (1118) angelenkt sind.

13. Sägemaschine nach einem der Ansprüche 11 bis 12, dadurch gekennzeichnet, daß die Spanreißschutzorgane (1120, 1122) mit mindestens einem Federelement (1130) zusammenarbeiten, das bestrebt ist, die Spanreißschutzorgane (1120, 1122) mit dem Sägeblatt (10) in Druckverbindung zu bringen.

14. Sägemaschine nach einem der Ansprüche 11 bis 13, dadurch gekennzeichnet, daß die Spanreißschutzorgane (1120, 1122) im Kontaktbereich mit dem Sägeblatt (10) Fühler (1132, 1134) besitzen.

15. Sägemaschine nach einem der Ansprüche 11 bis 14, dadurch gekennzeichnet, daß die Spanreißschutzorgane (1120, 1122) stufenförmig abgesetzte Teile sind.

## Claims

1. Sawing machine having a saw blade with an anti-splintering device, which can be connected operationally to the sawing machine, can be laid on workpieces and can be arranged laterally in relation to the saw blade and in the region of the saw blade teeth emerging from the workpiece, the anti-splintering device (16, 1116) being in pressure contact with the saw blade (10) on at least one side in the region of the emerging saw blade teeth (14), characterized in that a first region (32) of the anti-splintering device (16, 1116) is supported with an adjustable force on the at least one side of the saw blade (10) outside the region of the saw blade teeth (14), a further region (34) of the anti-splintering device (16, 1116), which region can be laid on the workpiece, being arranged with a minimum clearance and essentially without a supporting force relative to the saw blade (10) on the at least one side of the saw blade teeth (14) after the sawing machine is switched on, and this further region (34) consisting of a material, for example wood, plastic or the like, which can be removed by the saw blade teeth (14).

2. Sawing machine according to Claim 1, characterized in that the anti-splintering device (16, 116) is of multi-part configuration, one part containing the first region, a sensor (32), and another part containing the further region, the anti-splintering member (34).

3. Sawing machine according to Claim 2, characterized in that the anti-splintering device (16, 1116) has a sensor (32, 1132, 1134) in pressure contact with the body (30) of the saw blade (10), which sensor supports the anti-splintering member (34) which is in pressure contact with the teeth (14) of the saw blade.

4. Sawing machine according to Claim 2 or 3, characterized in that the anti-splintering member (34) is adjustable relative to the sensor (32) and in that the sensor (32) is designed as a dog for the anti-splintering member (34).

5. Sawing machine according to one of Claims 2 to 4, characterized in that the sensor (32, 1132, 1134) consists of a bearing material.

6. Sawing machine according to one of Claims 1 to 5, characterized in that the anti-splintering device (16) is radially adjustable relative to the saw blade (10) and can thus be set.

7. Sawing machine according to one of Claims 1 to 6, characterized in that the anti-splintering device (16) can be connected to the sawing machine in an articulated manner and can be pivoted about the axis (24) of the saw blade (10) or about an axis (25) extending parallel to this axis (24).

8. Sawing machine according to one of Claims 1 to 7, characterized in that the anti-splintering device (16, 1116) interacts with at least one spring element (26, 28), by means of which the pressure of the anti-splintering device (16, 1116) acting on the saw blade (10) can be determined.

9. Sawing machine according to Claim 1 having a sawing table, characterized in that the further region (34, 1120, 1122) of the anti-splintering device (16, 1116) which can be laid on the workpiece (12) lies in a plane of contact defined by the workpiece (12) and the sawing table (20) or projects from the sawing table (20) towards the workpiece (12).

10. Sawing machine according to one of Claims 1 to 9, characterized in that the anti-splintering device (16) is accommodated in a housing (50) which can be releasably connected to the sawing machine.

11. Sawing machine according to one of Claims 1 to 10, characterized in that the anti-splintering device (1116) consists of a plug part (1118) which can be releaseably connected to the sawing machine and has two anti-splintering members (1120, 1122) which can be arranged laterally in relation to the saw blade (18) and can be brought into pressure contact with the saw blade (10).

12. Sawing machine according to Claim 11, characterised in that the anti-splintering members (1120, 1122) are articulated on the plug part (1118).

13. Sawing machine according to either of Claims 11 to 12, characterized in that the anti-splintering members (1120, 1122) interact with at least one spring element (1130) which tends to bring the anti-splintering members (1120, 1122) into pressure contact with the saw blade (10) .

14. Sawing machine according to one of Claims 11 to 13, characterized in that the anti-splintering members (1120, 1122) possess sensors (1132, 1134) in the region of contact with the saw blade (10).

15. Sawing machine according to one of Claims 11 to 14, characterized in that the anti-splintering members (1120, 1122) are parts which are offset in steps.

## Revendications

1. Scie mécanique comportant une lame équipée d'un dispositif anti-éclatement coopérant avec la scie, s'appliquant sur la pièce et pouvant être monté latéralement sur la lame de scie ainsi qu'au niveau des dents de la lame sortant de la pièce, le dispositif anti-éclatement (16, 1116) coopérant par une liaison de pression avec la lame de scie (10) au niveau de la sortie des dents (14) de la lame, sur au moins une face,
caractérisée en ce que
le dispositif anti-éclatement (16, 1116) s'appuie par une première zone (32) sur au moins une face de la lame de scie (10) en dehors de la zone des dents de scie (14), suivant une force réglable, le dispositif anti-éclatement (16, 1116) ayant une autre zone (34) qui peut s'appliquer sur l'ouvrage, avec un écartement minimum et pratiquement sans force d'appui par rapport à la lame de scie (10), sur au moins un côté des dents (14) de la lame de scie, cette autre zone (34) étant en une matière que les dents (14) de la lame de scie peuvent enlever, par exemple du bois, de la matière plastique ou une matière analogue.

2. Scie selon la revendication 1,
caractérisée en ce que
le dispositif anti-éclatement (16, 1116) est en plusieurs parties, une partie comprenant la première zone, c'est-à-dire un palpeur (32) et une autre partie comprenant l'autre zone, c'est-à-dire l'organe anti-éclatement (34).

3. Scie selon la revendication 2,
caractérisée en ce que
le dispositif anti-éclatement (16, 1116) comporte un palpeur (32, 1132, 1134) coopérant en pression avec le corps (30) de la lame de scie (10), ce palpeur portant l'organe anti-éclatement (34) coopérant par pression avec les dents (14) de la lame de scie.

4. Scie selon la revendication 2 ou 3,
caractérisée en ce que
l'organe anti-éclatement (34) est réglable par rapport au palpeur (32) et le palpeur (32) constitue un organe d'entraînement pour l'organe anti-éclatement (34).

5. Scie selon l'une des revendications 2 à 4,
caractérisée en ce que
le palpeur (32, 1132, 1134) est en une matière antifriction.

6. Scie selon l'une des revendications 1 à 5,
caractérisée en ce que
le dispositif anti-éclatement (16) est mobile radialement par rapport à la lame de scie (10) et est ainsi réglable.

7. Scie selon l'une des revendications 1 à 6,
caractérisée en ce que
le dispositif anti-éclatement (16) est relié de manière articulée à la scie et peut pivoter autour de l'axe (24) de la lame de scie ou autour d'un axe (25) parallèle à cet axe (24).

8. Scie selon l'une des revendications 2 à 7,
caractérisée en ce que
le dispositif anti-éclatement (16, 1116) coopère avec au moins un élément à ressort (26, 28) qui définit la pression exercée par le dispositif anti-éclatement (16, 1116) sur la lame de scie (10).

9. Scie selon la revendication 1, comportant un plateau
caractérisée en ce que
la zone (34, 1120, 1122) applicable sur l'ouvrage (12) et appartenant au dispositif anti-éclatement (16, 1116) est située dans un plan de contact défini par l'ouvrage (12) et le plateau (20) ou encore est en saillie du plateau (20) en direction de l'ouvrage (12).

10. Scie selon l'une des revendications 1 à 9,
caractérisée en ce que
le dispositif anti-éclatement (16) est logé dans un boîtier (50) relié de manière amovible à la scie.

11. Scie selon l'une des revendications 1 à 10,
caractérisée en ce que
le dispositif anti-éclatement (1116) se compose d'une fiche (1118) reliée de manière amovible à la scie, comportant deux organes anti-éclatement (1120, 1122) placés latéralement par rapport à la lame de scie (18), ces organes pouvant être mis en liaison de pression avec la lame de scie (10).

12. Scie selon la revendication 11,
caractérisée en ce que
les organes anti-éclatement (1120, 1122) sont articulés sur la pièce enfichable (1118).

13. Scie selon l'une des revendications 11 à 12,
caractérisée en ce que
les organes anti-éclatement (1120, 1122) coopèrent avec au moins un élément à ressort (1130) qui a tendance à pousser les organes anti-éclatement (1120, 1122) contre la lame de scie (10).

14. Scie selon l'une des revendications 11 à 13,
caractérisée en ce que
les organes anti-éclatement (1120, 1122) ont un palpeur (1132, 1134) dans la zone de contact avec la lame de scie (10).

15. Scie selon l'une des revendications 11 à 14,
caractérisée en ce que
les organes anti-éclatement (1120, 1122) sont des pièces étagées en gradins.
